# EUROPEAN PATENT SPECIFICATION

(11) **EP 1 511 228 B1**
(45) Date of publication and mention of the grant of the patent: **21.07.2010**
(21) Application number: 04018857.5
(22) Date of filing: 09.08.2004
(51) Int. Cl.: H04L 12/46

(54) **Method of control between devices connected to a heterogeneous network and device implementing the method**
Verfahren zur Kontrolle von an ein heterogenes Netzwerk angeschlossenen Geräten und Vorrichtung zum Durchführen des Verfahren
Procédé de commande des appareils reliés à un réseau hétérogène et dispositif mettant en oeuvre ce procédé

(30) Priority: 27.08.2003 FR 0310199
(43) Date of publication of application: 02.03.2005
(73) Proprietor: Thomson Licensing, Inc., 92100 Boulogne-Billancourt (FR)
(72) Inventor: Allie-Crocitti, Valérie, 92648 Boulogne Cedex (FR); Henry, Jean-Baptiste, 92648 Boulogne Cedex (FR); Sirot, Joel, 92648 Boulogne Cedex (FR)
(74) Representative: Le Dantec, Claude

(56) References cited:
- EP-A- 1 294 132
- WO-A-02/09384
- US-A- 6 085 236
- US-A1- 2003 110 298

## Description

The invention relates to a method of control between devices connected to heterogeneous networks, and the gateway implementing the method.

Document of state of the art, US2003/0110298 discloses a HAVI-UPNP bridging, the bridge translating control information transmitted from one device belonging to a first network to another device belonging to another network.

Prior art document EP1294132 is related to a bridge that provides access to a device on a first network to a second network.

The invention fits into the framework of a heterogeneous network having at least a first bus according to a first protocol, for example the IEEE 1394 protocol defined in the document "IEEE Std 1394-1995 High Performance Bus, 1996-08-30", and at least a second bus according to another protocol, for example the Ethernet protocol. The various buses of the heterogeneous network considered are connected via a gateway enabling the devices connected to the various buses to communicate with each other. The devices connected to the buses can be controlled remotely, that is to say the services that they offer are made accessible on their bus by virtue of compliance with control standards such as HAVi (Home Audio Video Interoperability), the specifications of which are in the document "HAVi Specification Version 1.1", on IEEE 1394, or UPnP (Universal Plug and Play), the architecture of which is defined in the document "UPnP Device Architecture 1.0", on Ethernet. These control standards enable a device, referred to as "client", to interact with and drive another device on the same bus, referred to as "target" device. The gateway also provides control services that can be used by a client device, connected to one of the buses, to access the services provided by a target device located either on the same bus or on another bus of the network. This gateway may for example comply with the OSGi (Open Service Gateway Initiative) specifications which are contained in the document "OSGi Service Platform. Release 3". This outcome is achieved because the gateway is compatible with all the control standards used by the various buses, and the standards are made accessible in the same way to all the devices of all the buses connected.

In such a network, the gateway is capable of accessing the services provided by the various devices present on the buses connected to this gateway, and therefore capable of controlling them. To this end the gateway makes use of the standard specific to each bus and this enables it to control the devices connected to that bus. The gateway also provides a control interface for controlling devices according to a standard protocol, for example HTTP (HyperText Transfer Protocol). Through this mechanism, target devices connected to any bus of the network can be controlled by any client device having software that is compatible with the standard protocol, for example an HTML (HyperText Markup Language) page browser using the HTTP protocol to communicate with the gateway. It is therefore possible in the network, for any client device equipped with the ad hoc browser, to control any target device connected either to the same bus or to another bus, via the control interface provided by the gateway. The control messages and responses flow according to the standard protocol, for example HTTP, between the client and the gateway, whereas the control messages flow according to the control standard specific to each bus between the gateway and the target device.

The invention relates to a method of control of a target device, by a client device, in a heterogeneous network containing at least one bus according to a first given protocol, at least a second bus according to a second protocol, a gateway between the buses providing centralized means of control of devices that are connected to the buses and that are able to act as target devices, the said centralized control means being used to control the target devices of each bus by using the control standard specific to the bus, the said centralized control means being made accessible to the devices able to act as clients via a server on the gateway according to a standard communication protocol, which control method is characterized in that it includes at least the following steps:
- a conditional transfer step for transferring, from the gateway to the client device, an application for controlling the target device;
- an execution step for the execution of this control application by the client device when the application is transferred, involving a direct dialogue between the two devices, client and target, according to the control standard of the bus to which they are connected.

According to a preferred embodiment of the invention, the method includes, for a client device, a first step for sending profile information to the gateway indicating its capability to execute a control application according to a given standard.

According to a preferred embodiment of the invention, the method includes, for the gateway, a decision-making step for the transfer of a control application to the client device.

According to a preferred embodiment of the invention, the decision-making step for the transfer of the control application is based on the said profile information and on the detection of the presence of the two devices, client and target, on the same bus.

According to a preferred embodiment of the invention, the control application is a Java application.

The invention also relates to the gateway equipment implementing the method.

The invention enables a client intending to control a target device located on the same bus as the client to exchange control messages directly on the bus using the native communication protocol of this bus. To this end, the client intending to interact with a target device connects to the gateway. The latter is able to provide a control interface for controlling all the devices of the network. This interface is provided in the same way for all the target devices of the network via a standard protocol, for example dynamic HTML pages. The gateway is the device that translates the control instructions passed by the client into commands adapted to the control standard (HAVi, UPnP or other) specific to the bus to which the target is connected. This results in saving bus bandwidth and load on the gateway which no longer serves as a necessary interface between the client and the target when these both exist on the same bus. Of course, this direct communication must not call into question the status, as known by the gateway, of the devices engaged in such a communication. To this end, the gateway collects, on the bus in question, the events triggered by state changes taking place on the devices in question so as to maintain an up-to-date status of the said devices.

Other features and advantages of the present invention will be apparent from the description that follows of the example embodiment, taken by way of non-limiting example, with reference to the accompanying figures in which:
Figure 1 is a block diagram of a typical heterogeneous network according to the invention.
Figure 2 is a functional diagram of a typical gateway according to the invention.
Figure 3 is a functional diagram of a typical source device.
Figure 4 is a diagram showing an example of communication according to the known prior art.
Figure 5 is a diagram showing the same example of communication according to the invention.

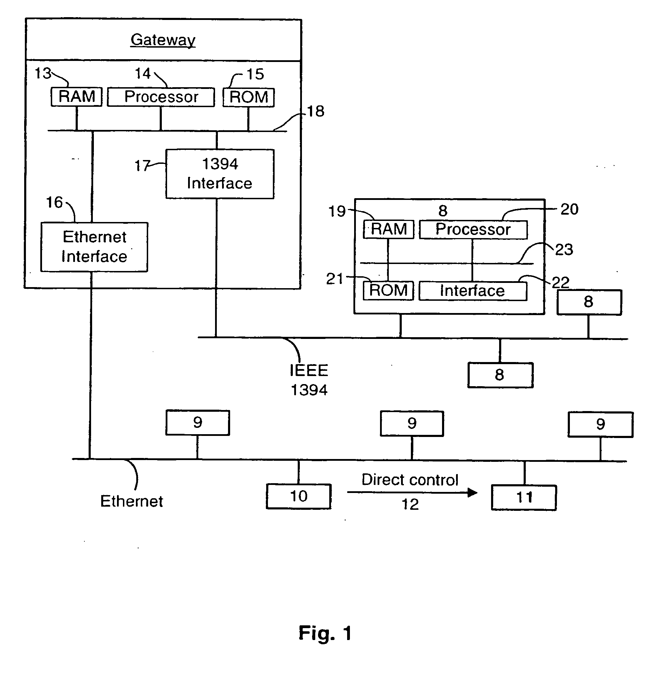

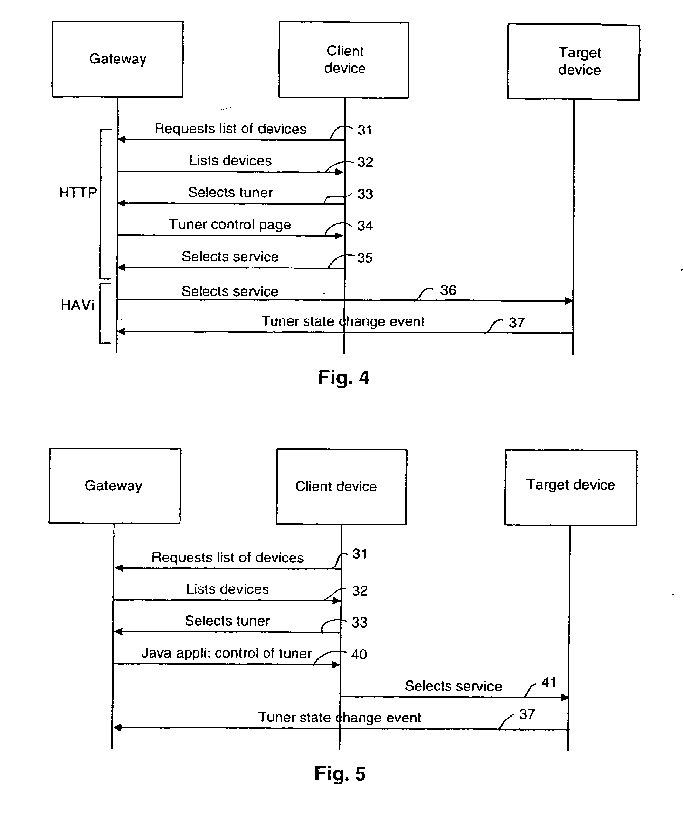

Figure 1 represents a block diagram of a network according to one embodiment. In this example, we have represented two types of buses interconnected by a gateway. Clearly, the invention can include other types of buses according to other protocols. In the example given we have a first bus according to the IEEE 1394 protocol connecting devices 8 that can be controlled according to the HAVi standard. A second bus is connected to the gateway according to the Ethernet protocol, this second bus connecting devices 9, 10 and 11 that are able to be controlled according to the UPnP standard; this network may also include devices not compatible with the UPnP standard connected directly to Ethernet. These devices are therefore clients but they themselves cannot be controlled by the other devices of the network; therefore they cannot be target devices. The gateway includes network interfaces 16 and 17 that are compatible with the interconnected buses; hence, in the example given, these are Ethernet and IEEE 1394 interfaces, on top of which are stacked control standards such as HAVi and UPnP. The gateway further includes a microprocessor 14 that can execute the programs stored in read-only memory (ROM) 15 and a working random access memory (RAM) 13. These components are interconnected via a bus 18. The connected devices have a similar architecture. They have a processor 20, RAM 19, ROM 21 and at least one network interface 22 for connecting them. These components are interconnected via an internal bus 23. The standards mentioned have been done so only by way of example and other standards may be used. The arrow 12 symbolizes the direct control of the target device 11 by the client device 10 according to the example embodiment of the invention. This control is performed by a control application obtained by the client device 10 from the gateway according to the method described in figure 5.

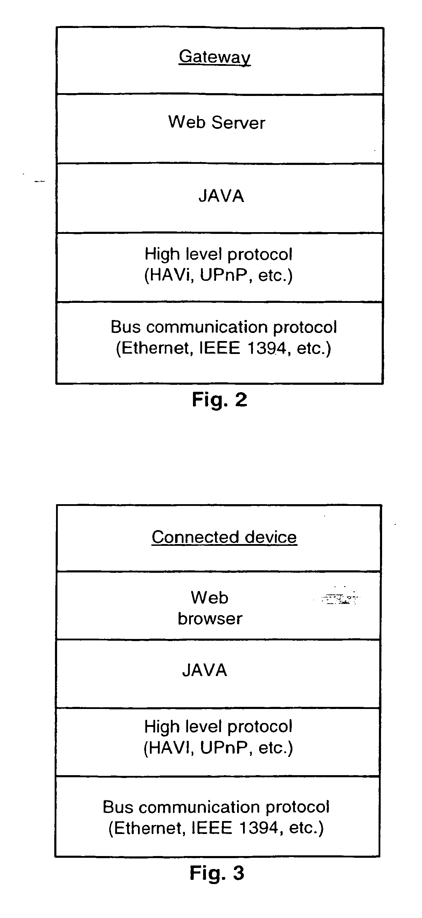

Figure 2 represents the main software layers forming the gateway of our example embodiment. Once again, we have the bus communication protocols such as Ethernet or IEEE 1394, on top of which are stacked the control standards such as HAVi or UPnP. A Java layer having communication interfaces required for communication with the control layers enables Java applications to use the said control layers present (HAVi, UPnP or other). Lastly, the gateway has web server software which enables a remote client to browse pages on the gateway. By virtue of the presence of the Java layer, dynamic web pages can exist on the gateway using this language to interact with network devices according to the available control standards. A remote client will therefore be able to interact with a Java application running on the server which will be able to communicate on the connected buses according to the control standard used by the said bus. The Java application contained in the page may also be downloaded to the client and executed locally. It is this transfer of the control application with the intention of executing the application on the client that allows direct communication between the client and the target. Of course, a language other than Java could be used, for example JavaScript, VBScript, PHP, etc. Indeed, any language interfaced with the control standard and able to be executed by the client, with the aim of a local execution, may be used.

Figure 3 represents the main software layers forming a connected device, on one of the buses, in our example embodiment. At the bottom layer we have the communication protocol for communicating with the physical network which may be Ethernet, IEEE 1394 or any other physical communication protocol. Above this layer, we have the control standard enabling other network devices to control the device; this standard may be HAVi for a home network, or UPnP on an Ethernet network, or any other control standard. Without this control standard it is impossible for the device to be driven by another device on the network and therefore impossible for it to act as a target device. Without this layer it would also be impossible for the device to run a control application to directly drive a target device present on the bus. However, this does not prevent the device from being able to act as a client and from driving a target device via a central control application on the gateway. This may be the case for devices connected occasionally to the network, in particular via Ethernet, such as personal digital assistants, portable MP3 music devices or other devices. In order to be able to access the gateway services and the control facilities for controlling other devices, a browser that is compatible with the server of the gateway is also required. This browser, for example a web browser, can be used to connect to the server implemented on the gateway and therefore to access the pages for controlling target devices of the network. A Java implementation having the API (Application Programming Interface) to the control standard used on the network will enable control applications from the gateway to be executed locally. Without this Java layer or the Java API driving the control standard, the control application cannot be used locally for this device, according to the example embodiment of the invention. In this case the device will be able to use only the gateway to drive the target devices of the network.

Figure 4 is a diagram showing an example of communication according to the known prior art. In this example a client device, for example an HAVi monitor, intends to access a service provided by a target device, for example an HAVi tuner, to display a programme, picked up by the tuner, on the monitor. Step 31 consists in the client requesting the page of devices available on the network, and it obtains this page in step 32. Step 33 then consists in selecting the chosen target device, the tuner. It obtains the tuner control page via step 34, and this enables it to select the chosen programme in step 35. Next, step 36 will consist in the gateway driving the tuner according to the programme desired by sending it the HAVi controls that enable the desired programme to be selected and data to be exchanged between the tuner and the monitor. Lastly, the change of state of the tuner will result in the transmission of an HAVi event which will be received by the gateway enabling it to keep the state of the tuner in memory, and this is step 37.

Figure 5 is a diagram showing the same example of communication according to the example embodiment of the invention. Steps 31, 32 and 33 are similar to those in figure 4. But here, step 40 will consist in the gateway, in response to the selection of the tuner, transmitting with the page a Java application which will be executed directly on the client and will enable direct control of the tuner by using the HAVi protocol. The selection of the programme desired will therefore be interpreted by the Java program which will generate the HAVi controls intended for the tuner. These controls are sent to the tuner directly in step 41 without passing via the gateway. The change of state of the tuner will still result in the transmission of an event which will be picked up by the gateway as in the previous example according to a same step 37.

It remains for us to detail how the gateway knows whether it must maintain centralized control and generate pages allowing the client to drive the target devices via the central application or, on the other hand, pages containing the Java control program to be executed on the client device.

The conditions that must be satisfied in order to be able to decentralize control to the client are, first, that the client and the target are on the same bus, and, secondly, that the client is capable of executing the Java program transmitted and has the software layer interfacing Java with the high level control protocol (HAVi, UPnP, etc.). In the example embodiment described, the Java classes implementing this interface layer between Java and, for example, HAVi, are not transmitted in the Java program sent to the client, but must therefore be present on the client.

To ensure that the gateway has this information enabling it to decide upon this decentralization of control, the devices connecting to the network must send the gateway profile information indicating their capabilities. In the example embodiment in question, this profile information can take three values: HAVi, UPnP and NoControl. The value HAVi indicates that the device has capabilities enabling it to control HAVi devices; this would therefore be an HAVi-compatible device having Java capabilities and the Java/HAVi interface layer. The value UPnP indicates the presence of a UPnP-compatible device having Java capabilities and the Java/UPnP interface. The value NoControl indicates a device lacking in one of the capabilities and which device cannot therefore run the Java control application.

The gateway, in the presence of this information and also according to the type of target device and its location, is therefore able to determine whether it must maintain centralized control or whether it is possible to decentralize this control to the client device. The gateway will therefore use its information to generate either an interface page with its own centralized control application, or to generate the control application that can be downloaded to the client in order to control the target device.

The example embodiment described is non-limiting; in particular, it is possible to implement the invention on other types of buses, equipped with other control protocols. It is also possible to use languages other than Java, such as JavaScript, VBScript, PHP or other languages, for the implementation of decentralized control applications.

## Claims

1. Method of control of a target device (9, 11), by a client device (8, 10), in a heterogeneous network containing at least one bus according to a first given protocol, at least a second bus according to a second protocol, a gateway between the buses providing centralized means of control of devices that are connected to the buses and that are able to act as target devices, the said centralized control means being used to control the target devices of each bus by using a control standard specific to the bus, the said centralized control means being made accessible to the devices able to act as clients via a server on the gateway according to a standard communication protocol, **characterized in that** said control method includes at least the following steps:
- a decision-making step for transferring, from the gateway to the client device, an application for controlling the target device;
- an execution step for the execution of this control application by the client device when the application is transferred, whereby the client device, by way of the control application being executed by the client device, directly controlling the target device according to the control standard of the bus to which the client and the target device are connected without passing via the centralized control means.

2. Method according to Claim 1, **characterized in that** said method comprises, for a client device, a first step for sending profile information to the gateway indicating its capability to execute a control application according to a given standard.

3. Method according to Claim 1, **characterized in that** the decision-making step for the transfer of the control application is based on the said profile information and on the detection of the presence of the two devices, client and target (10,11), on the same bus.

4. Method according to one of Claims 1 to 3, **characterized in that** the control application is a Java application.

5. Gateway equipment between at least one bus according to a first given protocol and at least a second bus according to a second protocol, the said gateway providing centralized means of control of devices that are connected to the buses and that are able to act as target devices (9, 11), the said centralized control (40) means being used to control the target devices of each bus by using the control standard specific to the bus, the said centralized control means being made accessible to the devices able to act as clients (8, 10) via a server on the gateway according to a standard communication protocol, which gateway equipment is **characterized in that** it includes decision-making means for transferring a part of its control means to a client device so that the client device can directly control the target device, using said part of its control means, without passing via the gateway.

6. Gateway equipment according to Claim 5, **characterized in that** the decision-making means for the transfer of the control application to the client device use profile information of the client device indicating its capability of executing a control application.

7. Gateway equipment according to Claim 5 or 6, **characterized in that** the decision-making means for the transfer of the control application to the client device use detection of the presence of the two devices, client and target (10,11), on the same bus.

8. Gateway Equipment according to one of Claims 5 to 7, **characterized in that** the control application is a Java application.

## Patentansprüche

1. Verfahren zum Steuern einer Zielvorrichtung (9, 11) durch eine Client-Vorrichtung (8, 10) in einem heterogenen Netz, das mindestens einen Bus gemäß einem ersten gegebenen Protokoll, mindestens einen zweiten Bus gemäß einem zweiten Protokoll enthält, wobei ein Gateway zwischen den Bussen zentrale Mittel zur Steuerung der Vorrichtungen, die an die Bussen angeschlossen sind und die als Zielvorrichtungen wirken können, bereitstellt, wobei die zentralen Steuermittel zum Steuern der Zielvorrichtungen jedes Busses unter Verwendung eines für den Bus spezifischen Steuerstandards verwendet werden, wobei die zentralen Steuermittel für die Vorrichtungen, die als Clients wirken können, über einen Server an dem Gateway gemäß einem Standardkommunikationsprotokoll zugänglich gemacht werden, **dadurch gekennzeichnet, dass** das Steuerverfahren mindestens die folgenden Schritte enthält:
- einen Schritt des Entscheidungstreffens zum Übertragen einer Anwendung zum Steuern der Zielvorrichtung von dem Gateway zu der Client-Vorrichtung;
- einen Ausführungsschritt für die Ausführung dieser Steueranwendung durch die Client-Vorrichtung, wenn die Anwendung übertragen worden ist, wobei die Client-Vorrichtung über die Steueranwendung, die durch die Client-Vorrichtung ausgeführt wird, die Zielvorrichtung gemäß dem Steuerstandard des Busses, an den die Client- und die Zielvorrichtung angeschlossen sind, direkt steuert, ohne über die zentralen Steuermittel zu gehen.

2. Verfahren nach Anspruch 1, **dadurch gekennzeichnet, dass** das Verfahren für eine Client-Vorrichtung einen ersten Schritt zum Senden von Profilinformationen an das Gateway, die ihre Fähigkeit zum Ausführen einer Steueranwendung gemäß einem gegebenen Standard angeben, umfasst.

3. Verfahren nach Anspruch 1, **dadurch gekennzeichnet, dass** der Schritt des Entscheidungstreffens für die Übertragung der Steueranwendung auf den Profilinformationen und auf der Erfassung der Anwesenheit der zwei Vorrichtungen, Client und Ziel (10, 11), an demselben Bus beruht.

4. Verfahren nach einem der Ansprüche 1 bis 3, **dadurch gekennzeichnet, dass** die Steueranwendung eine Java-Anwendung ist.

5. Gateway-Anlage zwischen mindestens einem Bus gemäß einem ersten gegebenen Protokoll und mindestens einem zweiten Bus gemäß einem zweiten Protokoll, wobei das Gateway zentrale Mittel zur Steuerung von Vorrichtungen, die an die Busse angeschlossen sind und die als Zielvorrichtungen (9, 11) wirken können, bereitstellt, wobei die zentralen Steuer-(40)Mittel zum Steuern der Zielvorrichtungen jedes Busses unter Verwendung des für den Bus spezifischen Steuerstandards verwendet werden, wobei die zentralen Steuermittel für die Vorrichtungen, die als Clients (8, 10) wirken können, über einen Server an dem Gateway gemäß einem Standardkommunikationsprotokoll zugänglich gemacht werden, wobei die Gateway-Anlage **dadurch gekennzeichnet ist, dass** sie Mittel zum Entscheidungstreffen zum Übertragen eines Teils ihrer Steuermittel an eine Client-Vorrichtung enthält, sodass die Client-Vorrichtung die Zielvorrichtung unter Verwendung des Teils ihrer Steuermittel direkt steuern kann, ohne über das Gateway zu gehen.

6. Gateway-Anlage nach Anspruch 5, **dadurch gekennzeichnet, dass** die Mittel zum Entscheidungstreffen für die Übertragung der Steueranwendung an die Client-Vorrichtung Profilinformationen der Client-Vorrichtung verwenden, die ihre Fähigkeit zum Ausführen einer Steueranwendung angeben.

7. Gateway-Anlage nach Anspruch 5 oder 6, **dadurch gekennzeichnet, dass** die Mittel zum Entscheidungstreffen für die Übertragung der Steueranwendung an die Client-Vorrichtung die Erfassung der Anwesenheit der zwei Vorrichtungen, Client und Ziel (10, 11), an demselben Bus verwenden.

8. Gateway-Anlage nach einem der Ansprüche 5 bis 7, **dadurch gekennzeichnet, dass** die Steueranwendung eine Java-Anwendung ist.

## Revendications

1. Méthode de contrôle d'un appareil cible (9, 11), par un appareil client (8,10), dans un réseau hétérogène contenant au moins un bus selon un premier protocole donné, au moins un second bus selon un second protocole, une passerelle entre les bus offrant des moyens centralisés de contrôle des appareils connectés aux bus pouvant jouer le rôle d'appareil cible, lesdits moyens centralisés de contrôle permettant de contrôler les appareils cibles de chaque bus en utilisant une norme de contrôle propre au bus, lesdits moyens centralisés de contrôle étant rendus accessibles aux appareils pouvant jouer le rôle de clients via un serveur sur la passerelle selon un protocole de communication standard **caractérisée en ce que** la méthode comporte au moins les étapes suivantes :
- une étape de prise de décision pour transférer, depuis la passerelle vers l'appareil client, une application de contrôle de l'appareil cible ;
- une étape d'exécution de cette application de contrôle par l'appareil client lorsque cette application est transférée, ou l'appareil client, par l'application de contrôle étant exécuté par l'appareil client, contrôle directement l'appareil cible selon la norme de contrôle du bus auquel les appareils client et cible sont connectés sans passer par les moyens centralisés de contrôle.

2. Méthode selon la revendication 1, **caractérisé en ce que** la méthode comprend, pour un appareil client, une étape préalable d'envoi à la passerelle d'une information de profil indiquant sa capacité à exécuter une application de contrôle selon une norme donnée.

3. Méthode selon la revendication 1, **caractérisé en ce que** l'étape de prise de décision du transfert de l'application de contrôle est basée sur ladite information de profil et sur la détection de la présence des deux appareils, client et cible (10,11), sur le même bus.

4. Méthode selon l'une des revendications 1 à 3, **caractérisé en ce que** l'application de contrôle est une application JAVA.

5. Dispositif passerelle entre au moins un bus selon un premier protocole donné et au moins un second bus selon un second protocole, ladite passerelle offrant des moyens centralisés de contrôle des appareils connectés aux bus pouvant jouer le rôle d'appareil cible (9,11), lesdits moyens centralisés de contrôle (40) étant utilisés pour contrôler les appareils cibles de chaque bus en utilisant la norme de contrôle propre au bus, lesdits moyens centralisés de contrôle étant rendus accessibles aux appareils pouvant jouer le rôle de clients (8,10) via un serveur sur la passerelle selon un protocole de communication standard, ladite passerelle étant **caractérisée en ce qu'**elle comporte des moyens de prise de décision pour transférer une partie de ses moyens de contrôle vers un appareil client de façon à ce que l'appareil client peut directement contrôler l'appareil cible sans passer par ladite passerelle.

6. Dispositif passerelle selon la revendication 5 **caractérisé en ce que** les moyens de prise de décision du transfert de l'application de contrôle vers l'appareil client utilisent une information de profil de l'appareil client indiquant sa capacité à exécuter une application de contrôle.

7. Dispositif passerelle selon la revendication 5 ou 6 **caractérisé en ce que** les moyens de prise de décision du transfert de l'application de contrôle vers l'appareil client utilisent la détection de la présence des deux appareils, client et cible (10,11), sur le même bus.

8. Dispositif passerelle selon l'une des revendications 5 à 7 **caractérisé en ce que** l'application de contrôle est une application JAVA.
